# DEMANDE DE BREVET EUROPEEN

(11) **EP 0 855 694 A1**
(43) Date de publication de la demande: **29.07.1998**
(21) Numéro de dépôt: 98200147.1
(22) Date de dépôt: 20.01.1998
(51) Int. Cl.: G09G 5/40

(54) **Dispositif d'affichage permettant de superposer des graphismes sur des caractères alphanumériques**

(30) Priorité: 28.01.1997 FR 9700899
(71) Demandeur: Philips Electronics N.V., 5621 BA Eindhoven (NL)
(72) Inventeur: Ryon, David, 75008 Paris (FR); Danneville, Bernard, 75008 Paris (FR); Boursier, Alain, 75008 Paris (FR)
(74) Mandataire: Chaffraix, Jean

(57) **Abrégé**

Ce dispositif d'affichage est formé à partir d'un circuit de contrôle 8, destiné à l'affichage de caractères alphanumériques. Pour pouvoir superposer sur ces caractères alphanumériques des graphismes, il est prévu une mémoire de graphisme 20 qui contient tous les pixels de l'image à visualiser sur l'écran 2. Un comparateur 26 détermine le choix de l'information à visualiser sur l'écran 2 en pilotant un commutateur 28. Ce choix est déterminé par une valeur particulière emmagasinée dans la mémoire 20 qui est balayée en synchronisme avec le balayage de l'écran.

Application : affichage de poste téléphonique.

## Description

L'invention concerne un dispositif d'affichage comportant :
- des accès pour recevoir des informations de première espèce à afficher,
- un écran pour l'affichage de différentes informations,
- un circuit de contrôle pour fournir audit écran des signaux d'affichage définis par lesdites informations de première espèce.

L'invention concerne aussi un appareil téléphonique comportant un tel dispositif d'affichage.

De tels dispositifs constitués par un écran de type LCD piloté, par exemple par un circuit de contrôle de type STV9410, sont bien connus et peuvent être utilisés dans des appareils téléphoniques pour constituer leur écran. Ces circuits permettent d'afficher des informations de première espèce constituées par une série de caractères alphanumériques ou autres.

Ce genre d'informations affichées devient un peu insuffisant et on souhaite apporter à ces écrans, des enrichissements constitués par des graphismes. Notamment, on souhaite visualiser des photos. Il est possible aussi de visualiser un pointeur d'écran : une flèche, par exemple, dont le déplacement est commandé par une "souris" et dont les dimensions sont inconciliables avec celles des caractères habituellement utilisés.

La présente invention propose un dispositif cité dans le préambule qui permet de mélanger ou non des graphismes et des caractères.

Pour cela, un dispositif du genre mentionné dans le préambule est remarquable en ce qu'il comporte, en outre :
- une mémoire de graphiques pour contenir des données représentant des informations de seconde espèce à afficher, et
- un commutateur pour connecter l'écran sur ladite mémoire ou sur ledit circuit de contrôle en fonction d'une grandeur de commande dépendant desdites données.

Ainsi, en adressant cette mémoire de graphiques de façon synchronisée avec l'affichage, on balaye l'écran. Si les données représentent une image, l'écran représente cette image et si les données ne représentent pas une image alors l'information à visualiser dérive dudit circuit de contrôle.

Pour obtenir cette grandeur de commande, selon une caractéristique de l'invention, un tel dispositif d'affichage est remarquable en ce que la grandeur de commande est formée en fonction d'une certaine valeur de référence contenue dans l'information de seconde espèce.

La description suivante, faite en regard des dessins ci-annexés, le tout donné à titre d'exemple non limitatif fera bien comprendre comment l'invention peut être réalisée.
La figure 1 montre un dispositif conforme à l'invention.
La figure 2 montre un exemple d'affichage obtenu par les mesures proposées par l'invention.
La figure 3 montre un appareil téléphonique conforme à l'invention.
La figure montre un schéma électrique de l'appareil montré à la figure 3.

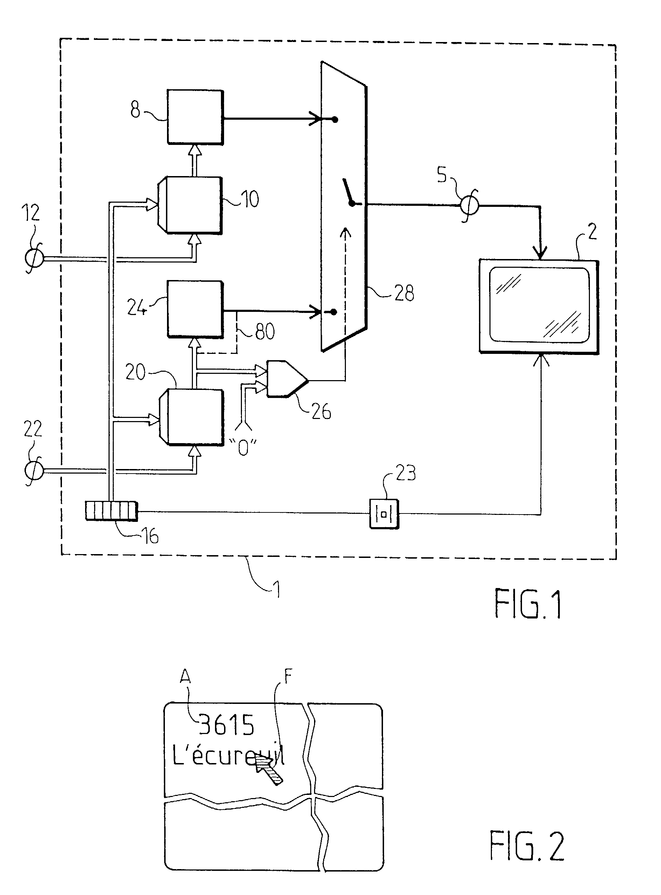

A la figure 1, le dispositif d'affichage est représenté par la référence 1. Ce dispositif comporte un écran 2 du type LCD muni d'une entrée 5 pour des informations à afficher. Ces informations à afficher peuvent provenir d'un circuit de contrôle 8 du type précité. Ce circuit traite des informations contenues dans une mémoire 10 pour afficher des caractères alphanumériques ou semi-graphiques avec une gradation de gris limitée. Les informations contenues dans la mémoire 10 proviennent d'un accès 12. Un compteur de lecture 16 prélève les informations dans cette mémoire 10 pour les fournir au circuit de contrôle 8.

Pour obtenir d'autres formes à visualiser que celles qui sont préétablies à l'intérieur du circuit de contrôle 8, l'invention propose d'emmagasiner l'information d'une image ou d'un graphisme dans une mémoire 20 dite mémoire de graphique. Les informations contenues dans cette mémoire 20 proviennent d'un accès 22. Dans le cadre de l'exemple décrit, les pixels de cette image sont codés sur 15 niveaux et donc un demi-octet seulement est utilisé pour ce codage. Ces 15 niveaux sont respectivement gradués de 1 à 15. Un circuit d'horloge 23 permet de synchroniser le rythme de lecture des différentes mémoires, 10 et 20, avec l'affichage. Un dispositif de conversion 24 est utilisé pour faire apparaître dans de bonnes conditions les teintes de gris sur un écran de type LCD. Ce dispositif de conversion est décrit dans le document de brevet européen n° 0 623 912.

Selon une mesure de l'invention, on a prévu un comparateur de niveau 26 pour fournir une grandeur de commande à un commutateur 28. Ce comparateur 26 compare la valeur du pixel à la sortie de la mémoire 20 avec une valeur de référence "0". Cette valeur "0" correspond à un niveau de gris qui n'est pas utilisé pour les pixels. Cette valeur va permettre une commutation à l'intérieur du commutateur 28 pour que la borne 5 soit reliée à la sortie du dispositif 8 et une commutation de la borne 5 à la sortie du dispositif de conversion 24 pour les autres valeurs des pixels contenus dans la mémoire 20. Ainsi le graphisme viendra en superposition sur les caractères alphanumériques fournis par le circuit de contrôle 8.

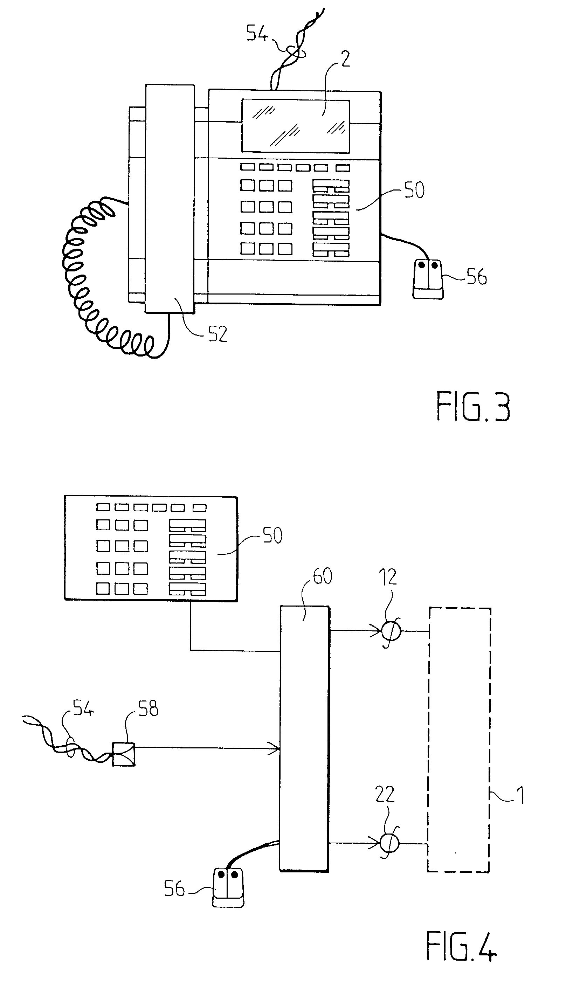

La figure 2 montre une vue de l'écran avec les caractères alphanumériques A qui proviennent du circuit de contrôle 8 et la flèche F qui provient, elle, de la mémoire de graphique 20. Cette flèche est susceptible de se déplacer dans l'écran de la façon habituelle au moyen d'une souris manoeuvrée par l'utilisateur. La figure 3, montre une souris rattachée à un appareil téléphonique conforme à l'invention.

Sur cette figure 3, seul l'écran 2 du dispositif d'affichage est visible. Cet appareil est muni notamment d'un clavier 50, d'un combiné 52. Il est raccordé au réseau commuté par une ligne téléphonique 54. A cet appareil est raccordée une souris 56 pour faire office d'outil de pointage pour l'écran 2.

La figure 4 montre le branchement du dispositif d'affichage pour l'appareil téléphonique de la figure 3. Les informations formées à partir du clavier 50 et les informations provenant de la ligne 54, après passage dans un transformateur hybride 58 sont affichées sur l'écran après un traitement effectué par un ensemble de traitement de données 60 que comporte habituellement ce genre d'appareil. Si les informations transmises sont considérées comme étant alphanumériques, alors elles sont appliquées à l'accès 12. Si elles sont considérées comme étant de nature graphique, elles sont alors appliquées à l'accès 22. Les informations de nature alphanumériques proviennent également du clavier. Comme il a été déjà dit le déplacement du pointeur défini par des mouvements de la souris, engendre une image du pointeur qui se déplace dans le plan d'adressage de la mémoire 20 afin de le visualiser sur l'écran 2.

Il va de soi que, pour des raisons de simplicité, le circuit 24 peut être omis, comme indiqué par les pointillés 80. La qualité de visualisation peut être suffisante.

## Revendications

1. Dispositif d'affichage comportant :
- des accès pour recevoir des informations de première espèce à afficher,
- un écran pour l'affichage de différentes informations,
- un circuit de contrôle pour fournir audit écran des signaux d'affichage définis par lesdites informations de première espèce,
caractérisé en ce qu'il comporte, en outre :
- une mémoire de graphiques pour contenir des données représentant des informations de seconde espèce à afficher, et
- un commutateur pour connecter l'écran sur ladite mémoire ou sur ledit circuit de contrôle en fonction d'une grandeur de commande dépendant desdites données.

2. Dispositif d'affichage selon la revendication 1, caractérisé en ce que la grandeur de commande est formée en fonction d'une certaine valeur de référence contenue dans l'information de seconde espèce.

3. Dispositif d'affichage selon l'une des revendications 1 à 2, caractérisé en ce qu'il comporte :
- des moyens d'adressage synchronisés avec l'affichage, pour adresser ladite mémoire de graphique,
- des moyens de comparaison pour comparer la valeur de la donnée emmagasinée avec ladite valeur de seuil et pour fournir ladite commande.

4. Dispositif d'affichage selon l'une des revendications 1 à 3, caractérisé en ce que les informations de première espèce sont constituées à partir d'un alphabet préétabli, tandis que les informations de seconde espèce le sont à partir de graphismes.

5. Appareil électronique comportant un clavier, un dispositif de pointage et un dispositif d'affichage selon l'une des revendications 1 à 4, caractérisé en ce que les informations de première espèce sont élaborées à partir dudit clavier et en ce que les informations de seconde espèce le sont à partir des moyens de pointage (souris notamment).
